# EUROPÄISCHE PATENTSCHRIFT

(11) **EP 2 817 349 B1**
(45) Veröffentlichungstag und Bekanntmachung des Hinweises auf die Patenterteilung: **19.04.2017**
(21) Anmeldenummer: 13704948.2
(22) Anmeldetag: 19.02.2013
(51) Int. Cl.: C08G 59/50, C08G 59/38, C08K 5/109, C08G 59/68

(54) **BLENDS FÜR VERBUNDWERKSTOFFE**
BLENDS FOR COMPOSITES
MÉLANGES POUR MATÉRIAUX COMPOSITES

(30) Priorität: 22.02.2012 US 201261601569 P; 22.02.2012 EP 12156447
(43) Veröffentlichungstag der Anmeldung: 31.12.2014
(73) Patentinhaber: BASF SE, 67056 Ludwigshafen am Rhein (DE)
(72) Erfinder: GEHRINGER, Lionel, F-67470 Schaffhouse-pres-Seltz (FR); DAUN, Gregor, 69151 Neckargemünd (DE); HENNINGSEN, Michael, 67227 Frankenthal (DE); KLOPSCH, Rainer, 67551 Worms (DE); FLEISCHEL, Olivier, 67059 Ludwigshafen (DE)
(74) Vertreter: BASF IP Association
(86) Internationale Anmeldenummer: PCT/EP2013/053229
(87) Internationale Veröffentlichungsnummer: WO 2013/124251

(56) Entgegenhaltungen:
- WO-A1-2010/010048
- US-A- 3 305 527

## Beschreibung

Der Gegenstand der vorliegenden Erfindung betrifft einen Blend enthaltend ein Epoxidharz, ein cyclisches Carbonat und einen Härter enthaltend ein Polyalkoxypolyamin, ein weiteres Amin und einen Katalysator, ein Verfahren zur Herstellung dieses Blends, die Verwendung des erfindungsgemäßen Blends zur Herstellung gehärteten Epoxidharzes sowie ein mit dem erfindungsgemäßen Blend gehärtetes Epoxidharz, insbesondere faserverstärkte gehärtete Epoxidharze zum Einsatz in Rotorblättern für Windkraftanlagen.

Blends aus härtbaren Epoxidzusammensetzungen und deren Verwendung zur Herstellung von Verbundwerkstoffen sind bekannt und werden in zahlreichen Patent- und Literaturveröffentlichungen wie im "Handbook of Epoxy Resin", McGraw-Hill 1967, von H. Lee und K. Neville beschrieben. Blends enthaltend Epoxidharze und Härtungsmittel (Härter) können durch eine geeignete Wahl der Komponenten und ihrer Mengenverhältnisse zueinander nach Aushärtung der Blends zu sogenannten gehärteten Epoxidharzen, die sehr gute mechanische Eigenschaften aufweisen wie in EP-A 2307358 beschrieben, umgesetzt werden.

Klassische Härter von Epoxidharzen sind Amine. Die Härtung von Epoxiden mit Aminen wird unter anderem bei sogenannten Infusionstechnologien eingesetzt, insbesondere bei VARTM Verfahren. Hierbei werden Di- und Polyepoxidharze mit Aminen unmittelbar vor dem Einfüllvorgang zum Blend gemischt, der Blend bei Temperaturen von 20°C - 50°C in eine Form eingesaugt oder gepumpt und danach bei Formtemperaturen von 55°C - 90°C zur Reaktion gebracht, wodurch es zur Aushärtung des Blends kommt. Die Geschwindigkeit des gesamten Prozesses ist dabei abhängig von der Dauer des Einfüllschrittes, der eigentlichen Infusion und von der Dauer der Aushärtung.

Ein spezielles großes Anwendungsgebiet von gehärteten Epoxidharzen ist die Verwendung zur Herstellung von Bauteilen aus faserverstärkten Kunststoffen bei denen Glasfasern, Carbon oder anderen Fasern zur mechanischen Versteifung dienen. Faserverstärkte Kunststoffe werden eingesetzt als Werkstoffe für Kraftfahrzeuge, Flugzeuge, Schiffe und Boote, für Sportartikel und Rotorblätter von Windkraftanlagen.

In den letzten Jahren sind die Dimensionen von Rotorblättern für Windkraftanlagen gestiegen und damit auch die Anforderungen insbesondere die mechanischen Eigenschaften der Blends, aus denen nach vollständiger Härtung die Rotorblätter hergestellt werden und die den erhöhten technischen Anforderungen genügen müssen. Die Herstellung von Rotorblättern für Windkraftanlagen erfolgt großtechnisch in der Regel mit Hilfe des Vakuuminfusions oder "Vacuum assisted resin transfer molding" Verfahren (VARTM). Eine Erhöhung der mechanischen Eigenschaften der Blends kann durch die Verwendung von cyclischen Carbonaten erreicht werden, wie sie in "the technical bulletin JEFFSOL® CARBONATES IN EPOXY FORMULATIONS", Huntsman 2005, beschrieben werden.

Bei der Herstellung von Leichtbau-Verbundwerkstücken wie beispielsweise Rotorblättern von Windkraftanlagen werden üblicherweise Leichtbaumaterialien wie Balsa oder insbesondere PVC-Schaum in Schichtstruktur mit Verstärkungsfasern und härtbaren EpoxidharzZusammensetzungen angeordnet. In Folge der Härtung der Epoxidharz-Zusammensetzung kann dann der PVC-Schaum in Abhängigkeit von der eingesetzten Epoxidharz-Zusammensetzung unter Verfärbung reagieren. Entsprechende Verfärbungen von PVC sind beschrieben (H. Wechsler, Journal of Polymer Science, 11 (1953), 233).

WO2010/010045 beschreibt Blends aus einer Harzkomponente und einer Härterkomponente, die neben Polyetherpolyamin enthaltenden aminischen Härtern, die in unterstöchiometrischer Menge eingesetzt werden, zusätzlich einen Guanidin basierten katalytischen Härter aufweist, insbesondere für die Verwendung in großen Composit-Bauteilen.

Cyclische Carbonate, wie sie in US 3,305,527 beschrieben werden, sind gute Reaktivverdünner für Epoxidharze. Die in US 3,305,527 beschriebenen Blends, die flüssige Amine bei Temperaturen von 20°C - 50°C als Härter enthalten, erhöhen die Reaktivität des Epoxidharzes. Für die Herstellung großer Bauteile wie beispielsweise Windrädern, ist es allerdings zwingend notwendig, dass die Viskosität des Blend, nicht so schnell ansteigt, dass entweder eine Benetzung der Fasern nicht ausreichend oder aber das Ausfüllen der Form mit dem Blend nicht vollständig erfolgen kann, bevor das Blend so durchgehärtet ist, dass eine weitere Verarbeitung nicht möglich ist. Die in US 3,305,527 beschriebenen betreffenden Blends sind daher aufgrund der zu großen Reaktivität und damit der zu schnellen Aushärtung in großen Bauteilen, die mittels VARTM-Technologie hergestellt werden, nicht einsetzbar.

In "the technical bulletin JEFFSOL® CARBONATES IN EPOXY FORMULATIONS", Huntsman 2005, wird ebenfalls beschrieben, dass cyclische Carbonate dafür bekannt sind, in Blends die thermische Stabilität zu erniedrigen. Die thermische Stabilität wird mittels der Formbeständigkeitstemperatur (high deflection temperatur (HDT)) beschrieben, die nach den Anforderung des Germanischen Lloyd für ein gehärteten Blend höher als 70°C liegen muss. Der Germanischer Lloyd übernimmt Zertifizierungen für Windkraftanlagen, die für die Aufstellung von Windkraftanlagen nötig sind. Für die betreffenden Blends, die in US 3,305,527 beschrieben sind, liegen diese Formbeständigkeitstemperaturen unter 65°C.

In JP 2002-187936 werden ebenfalls Blends beschrieben, die drei Komponenten, nämlich ein Epoxid, ein Amin und ein tertiäres Amin enthalten, wobei das Verhältnis von aktiven Wasserstoffatomen zu Epoxidgruppen im Bereich von 0,3 - 0,8 und das Gewichtsverhältnis von tertiären Aminen zu Epoxidharz im Bereich von 0,001 bis 0,1 liegen soll. Blends, die neben dem Epoxid auch noch cyclische Carbonate enthalten, werden in JP 2002-187936 nicht offenbart.

In WO-A1 2011/112405 wird ein Verfahren zur Verringerung der Exothermie beschrieben, bei dem neben Epoxiden auch cyclische Carbonate, insbesondere Propylencarbonat und ein Härter eingesetzt werden. Der Härter ist bevorzugt ausgewählt aus der Gruppe von einem cyclischem aliphatischem Amin wie IPDA und einem Polyalkoxypolyamin. Eine Kombination innerhalb des Blends aus wenigstens drei Stickstoffatomen tragendenden Verbindungen, die zusätzlich noch im unterstöchiometrischem Verhältnis zu der Summe aus cyclischem Carbonat und Epoxidgruppen eingesetzt werden können, wobei der Blend nach Aushärtung trotzdem jedoch die gewünschten mechanischen Eigenschaften aufweist, wird nicht offenbart.

Es war somit die Aufgabe der vorliegenden Erfindung, einen Blend bereit zu stellen, der zum einen für das VARTM Verfahren noch fließfähig genug ist um große faserverstärkte Formteile, insbesondere Rotorblätter für Windkraftanlagen herstellen zu können andererseits aber in kurzer Zeit vollständig ausgehärtet ist und weiterhin den hohen mechanischen Ansprüchen wie erhöhte Zugfestigkeit, Bruchdehnung und Biegefestigkeit sowie thermische Stabilität, die für den Einsatz von großen faserverstärkten Formteilen nötig sind, erfüllt oder verbessert. Ausreichende Fließfähigkeit ist insbesondere dann gegeben, wenn die Anfangsviskosität des Blends (bspw. bei 25°C) vergleichsweise gering ist und bei erhöhter Temperatur (bspw. bei 40°C) die Viskosität des Blends nur langsam ansteigt. Wünschenswert ist auch, dass bei der Aushärtung des Blends bei PVC-Schaum enthaltenden Composit-Formkörpern eine Verfärbung des PVC-Schaums soweit wie möglich vermieden wird. Weiter ist wünschenswert, dass Formkörper aus gehärtetem Blend nicht nur eine gute statische Mechanik, sondern auch gute dynamische Stabilität aufweisen.

Diese Aufgabe wird gelöst durch ein Blend enthaltend
a) eine Epoxidharzkomponente, enthaltend
   a1) 75 bis 97 Gewichtsteile, bezogen auf die Epoxidharzkomponente a), an einem oder mehreren Epoxidharzen ausgewählt aus der Gruppe von aromatischen und/oder cycloaliphatischen Epoxidharzen und,
   a2) 3 bis 18 Gewichtsteile, bezogen auf die Epoxidharzkomponente a), an einem oder mehreren cyclischen Carbonaten ausgewählt aus der Gruppe von cyclischen Carbonaten mit 1 bis 10 C-Atomen und,
   a3) 0 bis 15 Gewichtsteile, bezogen auf die Epoxidharzkomponente a), an einem oder mehreren Reaktivverdünnern,
   wobei die Gewichtsteile der Komponenten a1) bis a3) sich jeweils zu 100 addieren, und
b) einem Härter, enthaltend
   b1) 10 bis 79 Gewichtsteile, bezogen auf den Härter b), an einem oder mehreren Polyalkoxypolyaminen und,
   b2) 20 bis 89 Gewichtsteile, bezogen auf den Härter b), an einem oder mehreren weiteren Aminen ausgewählt aus der Gruppe von aromatischen, arylaliphatischen, cycloaliphatischen, heterocyclischen und aliphatischen Polyaminen mit mindestens 3 C-Atomen und mindesten 4 reaktiven NH-Funktionen in primären und/oder sekundären Aminogruppen und
   b3) 0,5 bis 30 Gewichtsteile, bezogen auf die Härter b), an einem oder mehreren Katalysatoren ausgewählt aus der Gruppe von tertiären Aminen, Imidazolen, Imidazolinen, Guanidinen mit weniger als 3 C-Atomen und/oder weniger als 4 reaktiven NH-Funktionen in Aminogruppen, sekundären Aminen mit weniger als 4 reaktiven NH-Funktionen, Harnstoff-Verbindungen und Ketiminen,
   wobei die Gewichtsteile der Komponenten b1) bis b3) sich jeweils zu 100 addieren, wobei das Verhältnis von Aminäquivalenten des Härters b) zum Äquivalent der Summe aus Epoxidharz, Reaktivverdünner und cyclischem Carbonat der eingesetzten Epoxidharzkomponente a) im Bereich von 0,3 bis 0,9 liegt,
   wobei die Reaktivverdünner a3) ausgewählt sind aus der Gruppe von 1,4-Butandiolbisglycidylether, 1,6-Hexandiolbisglycidylether, Glycidylneodecanoat, Glycidylversatat, 2-Ethylhexylglycidylether, C₈-C₁₀-Alkylglycidylether, C₁₂-C₁₄-Alkylglycidylether, C₁₃-C₁₅-Alkylglycidylether, p-tert-Butylglycidether, Butylglycidether, Nonylphenylglycidether, p-tert-Butylphenylglycid-ether, Phenylglycidether, o-Cresylglycidether, Polyoxypropylenglycoldiglycidether,Trimethylolpropantriglycidether (TMP), Glycerintriglycidether, Triglycidylparaaminophenol (TGPAP), Divinylbenzyldioxid und Dicyclopentadiendiepoxid.
im Rahmen der vorliegenden Erfindung ist unter NH-Funktionalität die Anzahl der reaktiven Wasserstoffe in den Aminogruppen einer Verbindung zu verstehen. Demnach weist bspw. ein primäres Monoamin eine NH-Funktionalität von 2, ein primäres Diamin eine NH-Funktionalität von 4 und ein Amin mit 3 sekundären Aminogruppen eine NH-Funktionalität von 3 auf.

Vorteilhaft ist der erfindungsgemäße Blend, wenn die Epoxidharze a1) ausgewählt sind aus der Gruppe der Bisphenol-A-bisglycidylether und/oder Bisphenol-F-bisglycidylether.

Vorteilhaft ist der erfindungsgemäße Blend, wenn die cyclischen Carbonate a2) Propylencarbonat und/oder Ethylencarbonat und/oder Butylencarbonat sind.

Vorteilhaft ist der erfindungsgemäße Blend, wenn die Reaktivverdünner a3) ausgewählt sind aus der Gruppe 1,4-Butandiolbisglycidylether, 1,6-Hexandiolbisglycidylether, C₁₂-C₁₄-Alkylglycidylether, C₁₃-C₁₅-Alkylglycidylether und Trimethylolpropantriglycidether (TMP).

Vorteilhaft ist der erfindungsgemäße Blend, wenn die Reaktivverdünner a3) ausgewählt sind aus der Gruppe 1,4-Butandiolbisglycidylether, 1,6-Hexandiolbisglycidylether, C₁₂-C₁₄-Alkylglycidylether und C₁₃-C₁₅-Alkylglycidylether.

Vorteilhaft ist der erfindungsgemäße Blend, wenn das Polyalkoxypolyamin b1) ausgewählt ist aus der Gruppe von Polyetheramin D230 (D230), Polyetheramin D 400, Polyetheramin T 403, Polyetheramin T 5000 und Jeffamine ^{®}XTJ 568 (XTJ 568).

Vorteilhaft ist der erfindungsgemäße Blend, wenn das weitere Amin b2) Isophorondiamin (IPDA) und /oder eine Mischung von 4-Methylcyclohexane-1,3-diamine und 2-Methyl-cyclohexane-1,3-diamine (MDACH) ist.

Vorteilhaft ist der erfindungsgemäße Blend, wenn der Katalysator b3) ausgewählt ist aus der Gruppe von Tetramethylguanidin (TMG), 2,4,6-Tris-(dimethylaminomethyl)-phenol (DMP 30), 1,4-Diazabicyclo[2,2,2]octan (DABCO) und Mischung dieser ist.

Vorteilhaft ist der erfindungsgemäße Blend, wenn die Viskosität des erfindungsgemäßen Blends bei 25°C kleiner als 350 mPas beträgt. Wenn diese Viskosität für einen Blend zu hoch ist, dann ist die Fließfähigkeit des Blends nicht mehr ausreichend für die Herstellung großer Composit-Formkörper, bspw. mittels VARTM Verfahren.

Vorteilhaft ist der erfindungsgemäße Blend, wenn der Anstieg der Viskosität bei 40°C länger als 90 Minuten zum Erreichen von 1000 mPas benötigt. Wenn diese Zeitspanne für einen Blend zu niedrig ist, dann ist die Fließfähigkeit des Blends nicht mehr ausreichend für die Herstellung großer Composit-Formkörper, bspw. mittels VARTM Verfahren.

Vorteilhaft ist der erfindungsgemäße Blend, wenn der erfindungsgemäße Blend noch Verstärkungsfasern enthält.

Ein weiterer Gegenstand der Erfindung ist ein Verfahren zur Herstellung des erfindungsgemäßen Blends, wobei die Epoxidharzkomponente a) und der Härter b) bei Temperaturen unterhalb der Anfangshärtungstemperatur vermischt werden.

Ein weiterer Gegenstand der Erfindung ist die Verwendung des erfindungsgemäßen Blends zur Herstellung von gehärteten Epoxidharzen.

Vorteilhaft ist die erfindungsgemäße Verwendung, wenn die gehärteten Epoxidharze Formkörper sind.

Vorteilhaft ist die erfindungsgemäße Verwendung, wenn der Formkörper verstärkendes Material enthält.

Ein weiterer Gegenstand der vorliegenden Erfindung ist ein gehärtetes Epoxidharz erhältlich durch Härtung des erfindungsgemäßen Blends, wenn das gehärtete Epoxidharz eine HDT größer als 70°C aufweist.

Vorteilhaft ist das erfindungsgemäße gehärtete Epoxidharz, wenn das gehärtete Epoxidharz einen Formkörper darstellt.

Ein weiterer Gegenstand der Erfindung ist ein Formkörper, wenn er faserverstärkt ist.

Vorteilhaft ist der erfindungsgemäße Formkörper, erhältlich durch Aushärtung einer Form die mit einem faserverstärktem Material ausgelegt ist und Einbringung des erfindungsgemäßen Blends mittels VARTM-Technologie in die Form.

Vorteilhaft ist der erfindungsgemäße Formkörper, wenn der Formkörper verstärkte Bauteile für Rotorblätter von Windkraftanlagen darstellt.

Die erfindungsgemäßen Blends enthalten eine Epoxidharzkomponente a), die mindestens ein Epoxidharz a1) und ein cyclisches Carbonat a2) enthalten.

Als Epoxidharze a1) können in dem erfindungsgemäßen Blend alle Epoxidharze sein ausgewählt aus der Gruppe von Bisphenol-A-bisglycidylether (DGEBA), Bisphenol-F-bisglycidylether, kernhydriertes Bisphenol-A-bisglycidylether, kernhydriertes Bisphenol-F-bisglycidylether, Bisphenol-S-bisglycidylether (DGEBS), Tetraglycidylmethylendianilin (TGMDA), Epoxy-Novolaken (den Reaktionsprodukten aus Epichlorhydrin und Phenolharzen (Novolak)), cycloaliphatischen Epoxidharzen wie 3,4-Epoxycyclohexylmethyl-3,4-epoxycyclohexancarboxylat und Hexahydrophthalsäurediglycidylester. Bevorzugt sind die Epoxidharze a1) ausgewählt aus der Gruppe von Bisphenol-A-bisglycidylether, Bisphenol-F-bisglycidylether und Mischungen dieser beiden Epoxidharze. In den erfindungsgemäßen Blends können ein oder mehrere Epoxidharze a1) eingesetzt werden. Bevorzugt ist der Einsatz nur eines Epoxidharzes a1).

Des Weiteren gehört zu der Epoxidharzkomponente a) neben den Epoxidharzen a1) auch der Einsatz eines oder mehrerer cyclischer Carbonate a2). Die cyclischen Carbonate a2) sind dabei ausgewählt aus der Gruppe von cyclischen Carbonate mit 1 bis 10 C-Atomen, bevorzugt Ethylencarbonat, Propylencarbonat, Butylencarbonat, Pentylencarbonat und Glycerincarbonat. Es kann ein oder mehrere cyclische Carbonate in der Epoxidharzkomponente a) als cyclisches Carbonate a2) eingesetzt werden. Bevorzugt ist der Einsatz eines cyclischen Carbonats a2). Besonders bevorzugt ist der Einsatz von Propylencarbonat als cyclisches Carbonat a2).

Neben den Epoxidharzen a1) und den cyclischen Carbonaten a2) können in der Epoxidharzkomponente a) des erfindungsgemäßen Blends auch noch Reaktivverdünner a3) enthalten sein. Diese Reaktivverdünner a3) sind dabei ausgewählt aus der Gruppe von 1,4-Butandiolbisglycidylether, 1,6-Hexandiolbisglycidylether, Glycidylneodecanoat, Glycidylversatat, 2-Ethylhexylglycidylether, C₈-C₁₀-Alkylglycidylether, C₁₂-C₁₄-Alkylglycidylether, C₁₃-C₁₅-Alkylglycidylether, p-tert-Butylglycidether, Butylglycidether, Nonylphenylglycidether, p-tert-Butylphenylglycid-ether, Phenylglycidether, o-Cresylglycidether, Polyoxypropylenglycoldiglycidether,Trimethylolpropantriglycidether (TMP), Glycerintriglycidether, Triglycidylparaaminophenol (TGPAP), Divinylbenzyldioxid und Dicyclopentadiendiepoxid. Bevorzugt sind die Reaktivverdünner a3) ausgewählt aus der Gruppe von 1,4-Butandiolbisglycidylether, 1,6-Hexandiolbisglycidylether, C₁₂-C₁₄-Alkylglycidylether, C₁₃-C₁₅-Alkylglycidylether und Mischungen dieser Verbindungen. Auch bei den Reaktivverdünnern a3) können ein oder mehrere Reaktivverdünner eingesetzt werden. Bevorzugt ist Einsatz von maximal einem Reaktivverdünner.

Für das erfindungsgemäße Blend ist der jeweilige Anteil der Epoxidharze a1), der cyclischen Carbonate a2) und der ggf. eingesetzen Reaktivverdünnern a3) innerhalb der Epoxidharzkomponente sehr entscheidend, um im resultierenden gehärteten Epoxidharz oder dem entsprechenden Formkörper die nötigen physikalischen Eigenschaften wie Zugfestigkeit und Bruchdehnungen zu erreichen, die für ein gehärtetes Epoxidharz aus einem Blend, der mittels VARTM Verfahren verarbeitet werden soll, nötig sind.

Der Anteil an Epoxidharz a1) liegt für die erfindungsgemäßen Blends daher im Bereich von 75 bis 97 Gewichtsteilen, bevorzugt im Bereich von 80 zu 95 Gewichtsteilen, besonders bevorzugt im Bereich von 85 bis 94 Gewichtsteilen bezogen auf die Epoxidharzkomponente a).

Für die erfindungsgemäßen Blends liegt der Anteil der cyclischen Carbonate a2) im Bereich von 3 bis 18 Gewichtsteile, bevorzugt im Bereich von 5 bis 15 Gewichtsteile, besonders bevorzugt im Bereich von 6 bis 13 Gewichtsteile, bezogen auf die Epoxidharzkomponente a).

In einer besonderen Ausführungsform des erfindungsgemaßen Blends liegt der Anteil der cyclischen Carbonate a2) im Bereich von 6 bis 18 Gewichtsteile, wobei das cyclische Carbonat a2) vorzugsweise Propylencarbonat ist. Diese Blends zeichnen sich auch dadurch aus, dass die gehärteten Epoxidharze daraus besonders gute dynamische Stabilitäten aufweisen.

Als Maß für die dynamische Stabilität kann die Wechselfestigkeit herangezogen werden. Sie kann ermittelt werden im Dauerschwingungsversuch nach Wöhler. Hierfür wird ein Versuchskörper zyklisch, meist unter einer über die Zeit sinusförmigen Beanspruchung belastet. Bei jeweils konstanter Spannungsamplitude wird der Versuch bis zum Bruch des Versuchskörpers durchgeführt. Die jeweils eingesetzte Spannungsamplitude gegen die dabei erreichte Anzahl von Lastwechsel bis zum Bruch (Lastwechselzahl) ergibt eine Kennlinie für das zu prüfende Material (Wöhlerlinie). Eine vergleichsweise hohe dynamische Stabilität liegt dann vor, wenn bei einer bestimmten Spannungsamplitude eine vergleichsweise hohe Lastwechselzahl erreicht wird, bzw. wenn eine bestimmte Lastwechselzahl mit einer vergleichsweise hohen Spannungsamplitude erreicht wird.

Des Weiteren liegt der Anteil der Reaktivverdünner a3) im Bereich von 0 bis 15 Gewichtsteilen, bevorzugt 0 bis 10 Gewichtsteilen, bezogen auf die Epoxidharzkomponente a).

Die Anteile der einzelnen Gruppen a1) bis a3) innerhalb der Epoxidharzkomponente a) muss so gewählt sein, dass die Summe der Gewichteile der Gruppe a1)-a3) sich zu 100 addieren.

Bevorzugte Kombinationen sind, wenn a1) im Bereich von 75 bis 97 Gewichtsteilen, a2) im Bereich von 3 bis 18 Gewichtsteilen und a3) im Bereich von 0 bis 15 Gewichtsteilen, jeweils bezogen auf die Epoxidharzkomponente a), liegen. Besonders bevorzugt ist, wenn a1) im Bereich von 80 bis 95 Gewichteilen, a2) im Bereich von 5 bis 15 Gewichtsteilen und a3) im Bereich von 0 bis 10 Gewichtsteilen liegt, jeweils bezogen auf die Epoxidharzkomponente a). Ganz besonders bevorzugt ist, wenn a1) im Bereich von 85 bis 94 Gewichtsteilen, a2) im Bereich von 6 bis 13 Gewichtsteile und a3) im Bereich von 0 bis 10 Gewichtsteilen liegt, bezogen auf die Epoxidharzkomponente a) liegt und die Summe der Gruppen a1) und a2) sich zu 100 addieren. Neben der Epoxidharzkomponente a) enthalten die erfindungsgemäßen Blends auch noch einen Härter b). Der Härter b) enthält wiederherum mindestens ein Polyalkoxypolyamin b1), mindestens ein weiteres Amin b2) ausgewählt, aus der Gruppe von aromatischen, arylaliphatischen, cycloaliphatischen, heterocyclischen und aliphatischen Polyaminen mit mindestens 3 C-Atomen und mindesten 4 reaktiven NH-Funktionen in primären und/oder sekundären Aminogruppen, und mindestens einen Katalysator b3).

Die Polyalkoxypolyamine b1) können dabei sein ausgewählt aus der Gruppe von 3,6-dioxa-1,8-octandiamin, 4,7,10-Trioxa-1,13-tridecandiamin, 4,7-Dioxa-1,10-decandiamin, 4,9-Dioxa-1,12-docecandiamin, Polyetheraminen auf der Basis von Triethylenglykol mit einer mittleren Molmasse von 148, difunktionellem, primären Polyetheramin hergestellt durch Aminierung eines mit Propylenoxid aufgepfropften Ethylenglykols mit einer mittleren Molmasse von 176, difunktionellem, primären Polyetheramin auf der Basis von Propylenoxid mit einer mittleren Molmasse von 4000, difunktionellem, primären Polyetheramin hergestellt durch Aminierung eines mit Propylenoxid aufgepfropften Polyethylenglykols mit einer mittleren Molmasse von 2000, aliphatischem Polyetheramin auf der Basis von mit Propylenoxid gepfropftem Polyethylengylkol mit einer mittleren Molmasse von 900, aliphatischem Polyetheramin auf der Basis von mit Propylenoxid gepfropftem Polyethylenglykol mit einer mittleren Molmasse von 600, difunktionellem, primären Polyetheramin hergestellt durch Aminierung eines mit Propylenoxid aufgepfropften Diethylenglykols mit einer mittleren Molmasse von 220, aliphatischem Polyetheramin auf der Basis eines Copolymers aus Poly(tetramethylenetherglycol) und Polypropylenglycol mit einer mittleren Molmasse von 1000, aliphatischem Polyetheramin auf der Basis eines Copolymers aus Poly(tetramethylenetherglycol) und Polypropylenglycol mit einer mittleren Molmasse von 1900, aliphatischem Polyetheramin auf der Basis eines Copolymers aus Poly(tetramethylenetherglycol) und Polypropylenglycol mit einer mittleren Molmasse von 1400, Polyethertriamin auf der Basis eines mit Butylenoxid gepfropftem mindestens dreiwertigen Alkohols mit einer mittleren Molmasse von 400, aliphatischem Polyetheramin hergestellt durch Aminierung von mit Butylenoxid aufgepfropften Alkoholen mit einer mittleren Molmasse von 219 (Jeffamine^{®}XTJ 568 (XTJ 568)), Polyetheramin auf der Basis von Pentaerythrit und Propylenoxid mit einer mittleren Molmasse von 600, difunktionellem, primären Polyetheramin auf Basis von Polypropylenglykol mit einer mittleren Molmasse von 2000, difunktionellem, primären Polyetheramin auf der Basis von Polypropylenglykol mit einer mittleren Molmasse von 230 (D 230), difunktionellem, primären Polyetheramin auf der Basis von Polypropylenglykol mit einer mittleren Molmasse von 400 (D 400), trifunktionellem, primären Polyetheramin hergestellt durch Reaktion von Propylenoxid mit Trimethylolpropan gefolgt durch eine Aminierung der endständigen OH-Gruppen mit einer mittleren Molmasse von 403 (T403), trifunktionellem, primären Polyetheramin hergestellt durch Reaktion von Propylenoxid mit Glycerin gefolgt durch eine Aminierung der endständigen OH-Gruppen mit einer mittleren Molmasse von 5000 (T 5000) und einem Polyetheramin mit einer mittleren Molmasse von 400 hergestellt durch Aminierung von PolyTHF, das eine mittlere Molmasse von 250 aufweist. Bevorzugte Polyalkoxypolyamine b1) sind ausgewählt aus der Gruppe von Polyetheramin D230 (D230), Polyetheramin D 400, Polyetheramin T 403, Polyetheramin T 5000, Jeffamine^{®}XTJ 568 (XTJ 568) und Mischungen dieser. In dem Härter b) können sowohl ein als auch mehrere Polyalkoxypolyamine b1) eingesetzt werden. Bevorzugt ist der Einsatz nur eines Polyalkoxypolyamines als b1). Ganz besonders bevorzugt ist das Polyalkoxypolyamin b1) Polyetheramine D 230 (D230) und/oder Jeffamine^{®}XTJ 568 (XTJ 568).

Neben den Polyalkoxypolyaminen b1) enthält der Härter b) auch noch wenigstens ein weiteres Amin b2). Polyalkoxypolyaminen b1) sind nicht der Gruppe der weiteren Amine b2) zuzurechnen. Diese weiteren Amine b2) können dabei sein ausgewählt aus der Gruppe von 1,12-Diaminododecan, 1,10-Diaminodecan, 1,2-Diaminocyclohexan, 1,2-Propandiamin, 1,3-Bis-(aminomethyl)cyclohexan, 1,3-Propandiamin, 1- Methyl-2,4-diaminocyclohexan, 2,2'-Oxy-bis(ethylamin), 3,3'-Dimethyl-4,4'-diaminodicyclohexylmethan, 4,4'-Methylendianilin, 4-Ethyl-4-methylamino-1-octylamin, Diethylentriamin, Ethylendiamin, Hexamethylendiamin, Isophorondiamin, eine Mischung aus 4-Methylcyclohexane-1,3-diamine und 2-Methylcyclohexane-1,3-diamine (MDACH), Menthendiamin, Xylylendiamin, N-Aminoethylpiperazin, Neopentandiamin, Norbornandiamin, Octanmethylendiamin, Piperazin, 4,8-Diamino-tricyclo[5.2.1.0]decan, Tolylendiamin, Triethylentetramin und Trimethylhexamethylendiamin. Bevorzugt sind die weiteren Amine b2) ausgewählt aus der Gruppe von Isophorondiamin (IPDA), einer Mischung aus 4-Methylcyclohexan-1,3-diamin und 2-Methylcyclohexan-1,3-diamin (MDACH) und Mischungen dieser Amine. Die Mischung aus 4-Methylcyclohexan-1,3-diamin und 2-Methylcyclohexan-1,3-diamin (MDACH) ist als weiteres Amine b2) in dem Härter b) des erfindungsgemäßen Blends besonders bevorzugt.

Neben dem Polyalkoxypolyamin b1) und dem weiteren Amin b2) muss der Härter b) des erfindungsgemäßen Blends in jedem Fall noch einen Katalysator b3) enthalten. Der Katalysator b3) ist dabei ausgewählt aus der Gruppe von tertiären Aminen, Imidazolen, Imidazolinen, Guanidinen mit weniger als 3 C-Atomen und/oder weniger als 4 reaktiven NH-Funktionen in Aminogruppen, sekundäre Amine mit weniger als 4 reaktiven NH-Funktionen, Harnstoff-Verbindungen und Ketiminen. Bevorzugt ist der Katalysator b3) ausgewählt aus der Gruppe von tertiären Aminen, Imidazolen, Guanidinen mit weniger als 3 C-Atomen und/oder weniger als 4 reaktiven NH-Funktionen in Aminogruppen und Harnstoff-Verbindungen. Besonders bevorzugt ist der Katalysator b3) ausgewählt aus der Gruppe von tertiären Aminen und Guanidinen mit weniger als 3 C-Atomen und/oder weniger als 4 reaktiven NH-Funktionen in Aminogruppen.

Tertiäre Amine sind beispielsweise N,N-Dimethyl-benzylamin, 2,4,6-Tris-(dimethylaminomethyl)-phenol (DMP 30), 1,4-Diazabicyclo[2,2,2]octan (DABCO), 1,8-Diazabicyclo-[5.4.0]-undecen-7 (DBU), S-Triazin (Lupragen N 600), Bis-(2-dimethylaminoethyl)-ether (Lupragen N 206), Pentamethyldiethylentriamin (Lupragen N 301), Trimethylaminoethylethanolamin (Lupragen N 400), Tetramethyl-1,6-hexandiamin (Lupragen N 500), Aminoethylmorpholin, Aminopropylmorpholin, Aminoethylethylenharnstoff oder N-alkyl-substituierte Piperidinderivate. Imidazolen sind Imidazol selbst und dessen Derivate wie beispielsweise 1-Methylimidazol, 2-Methylimidazol, N-Butylimidazol, Benzimidazol, N-C₁₋₁₂-Alkylimidazole, N-Arylimidazole, 2,4-Ethyl-methyl-imidazol, 2-Phenylimidazol, 1-Cyanoethylimidazol oder NAminopropylimidazol. Imidazolinen sind Imidazolin selbst und dessen Derivate wie beispielsweise 2-Phenyl-imidazolin. Guanidine mit weniger als 3 C-Atomen und/oder weniger als 4 reaktiven NH-Funktionen in Aminogruppen sind Guanidin selbst oder dessen Derivate wie beispielsweise Methylguanidin, Dimethylguanidin, Trimethylguanidin, Tetramethylguanidin (TMG), Methylisobiguanid, Dimethylisobiguanid, Tetramethylisobiguanid, Hexamethylisobiguanid, Heptamethylisobiguanid oder Dicyandiamin (DICY). Sekundären Aminen mit weniger als 4 reaktiven NH-Funktionen sind beispielsweise N, N'-Diisopropylisophorondiamin (Jefflink^{®} XTJ-584), N,N'-Diisobutyl-4,4'-diamino-dicyclohexylmethan (Clearlink 1000), N-(Hydroxyethyl)anilin, Di-(2-methoxyethyl)amin, Piperidin oder Dialkylaminen wie Di-(2-ethylhexyl)amin, Dibutylamin, Dipropylamin, Ditridecylamin. Harnstoff-Verbindungen sind Harnstoff selbst und dessen Derivate wie beispielsweise 3-(4-chlorophenyl)-1,1-dimethyl-harnstoff (Monuron), 3-Phenyl-1,1-dimethylharnstoff (Fenuron), 3-(3,4-dichlorophenyl)-1,1-dimethyl-harnstoff (Diuron), 3-(3-Chloro-4-methylphenyl)-1,1-dimethylharnstoff (Chlorotoluron) und Tolyl-2,4 bis-N,N-dimethylcarbamid (Amicure UR2T). Ketimine sind beispielsweise Epi-Kure 3502 (ein Reaktionsprodukt aus Ethylendiamin mit Methylisobutylketon).

Bevorzugt ist der Katalysator b3) ausgewählt aus der Gruppe von Tetramethylguanidin (TMG), 2,4,6-Tris-(dimethylaminomethyl)-phenol (DMP 30) und 1,4-Diazabicyclo[2,2,2]octan (DABCO). In einer besonderen Ausführungsform ist der Katalysator b3) TMG und/oder DMP 30. In einer weiteren besonderen Ausführungsform ist der Katalysator b3) DABCO.
Um die gewünschten physikalischen Eigenschaften bei dem gehärteten erfindungsgemäßen Blend zu erhalten, ist der jeweilige Anteil des Polyalkoxypolyamins b1), des weiteren Amins b2) und des Katalysators b3) sehr entscheidend.

Der Anteil der Polyalkoxypolyamine b1) liegt im Bereich von 10 bis 79 Gewichtsteile, bezogen auf den Härter b), bevorzugt im Bereich von 20 bis 70 Gewichtsteile, bezogen auf den Härter b), besonders bevorzugt im Bereich von 20 bis 60 Gewichtsteile, bezogen auf den Härter b), insbesondere im Bereich von 22 bis 58 Gewichtsteile, bezogen auf den Härter b).

Für den erfindungsgemäßen Blend liegt der Anteil an weiteren Aminen b2) des Härters b) im Bereich von 20 bis 89 Gewichtsteilen, bevorzugt im Bereich von 29 bis 79 Gewichtsteilen und besonders bevorzugt im Bereich von 30 bis 60 Gewichtsteilen, bezogen auf den Härter b).

Der Anteil des Katalysators b3) im Härter b) des erfindungsgemäßen Blends liegt im Bereich von 0,5 bis 30 Gewichtsteilen bezogen auf den Härter b). >Bevorzugt liegt die untere Grenze dieses Bereichs bei 1, insbesondere bei 2, insbesondere bei 4 Gewichtsteilen. Bevorzugt liegt die obere Grenze dieses Bereichs bei 20 Gewichtsteilen..

In einer besonderen Ausführungsform des erfindungsgemäßen Blends liegt der Anteil des Katalysators b3) im Härter b) im Bereich von 0,5 bis 7 Gewichtsteilen, bevorzugt im Bereich von 1 bis 5 Gewichtsteilen jeweils bezogen auf den Härter b), wobei der Katalysator b3) vorzugsweise DPM-30 und/oder DABCO, besonders bevorzugt DABCO ist. Diese Blends zeichnen sich auch dadurch aus, dass bei ihrer Härtung bei PVC-haltigen Composit-Forkörpern eine Verfärbung des PVC besonders effektiv vermieden wird.

Die Anteile der einzelnen Gruppen b1-b3) innerhalb des Härters b) muss so gewählt sein, dass die Summe der Gewichtsteile der Gruppen b1) - b3) 100 ergibt.

Bevorzugte Zusammensetzungen der Gruppen b1-b3) innerhalb des Härters b) sind solche, bei denen die Polyalkoxypolyamine b1) im Bereich von 10 bis 79 Gewichtsteilen, die weiteren Amine b2) im Bereich von 20 bis 89 Gewichtseilen und die Katalysatoren b3) im Bereich von 0,5 bis 30 Gewichtsteilen, jeweils bezogen auf den Härter b) liegen. Bevorzugt sind solche Zusammensetzungen, bei denen die Polyalkoxypolyamine b1) im Bereich von 20 bis 70 Gewichtsteilen, die weiteren Amine b2) im Bereich von 29 bis 79 Gewichtsteilen und die Katalysatoren b3) im Bereich von 1 bis 20, jeweils bezogen auf den Härter b) liegen.
Der erfindungsgemäße Blend wird durch die dem Fachmann bekannten mechanischen Methoden aus den Einzelbestandteilen bei Temperaturen unterhalb von 160°C, bevorzugt im Bereich von 5 bis 30 °C gemischt.
In einer Ausführungsform der vorliegenden Erfindung weist der Blend eine Viskosität kleiner als 500 mPas bei 25°C, bevorzugt kleiner als 400 mPas bei 25°C, besonders bevorzugt kleiner als 350 mPas bei 25°C auf.
Der erfindungsgemäße Blend benötigt zum Erreichen einer Viskosität von 1000 mPa s bei 40°C, gemessen nach DIN 16945, länger als 60 Minuten, bevorzugt länger als 80 min, besonders bevorzugt länger als 90 min.
Der erfindungsgemäße Blend zeigt nach vollständiger Aushärtung eine Formbeständigkeitstemperatur (HDT (bestimmt nach ISO 75 A)) von größer als 70°C.
Nach vollständiger Aushärtung des erfindungsgemäßen Blends erhält man ein gehärtetes Epoxidharz. Die Zugfestigkeit des gehärteten Epoxidharzes (bestimmt nach ISO 527) ist größer oder gleich 70 MPa, bevorzugt größer als 74 MPa, besonders bevorzugt größer als 78 MPa. Das Zugmodul des erfindungsgemäßen gehärteten Epoxidharzes (bestimmt nach ISO 527) ist größer oder gleich 3100 MPa, bevorzugt größer als 3200 MPa, besonders bevorzugt größer als 3300 MPa.
Die Bruchdehnung des erfindungsgemäßen gehärteten Epoxidharzes (bestimmt nach ISO 527) ist größer als 6,0%, bevorzugt größer als 6,5%, besonders bevorzugt größer als 7%.
Die Biegefestigkeit des erfindungsgemäßen gehärteten Epoxidharzes (bestimmt nach ISO 178) ist größer als 110 MPa, bevorzugt größer als 115 MPa, besonders bevorzugt größer als 120 MPa, insbesondere größer als 125 MPa.
Das Biegemodul des erfindungsgemäßen gehärteten Epoxidharzes (bestimmt nach ISO 178) ist größer als 3200 MPa, bevorzugt größer als 3300 MPa, besonders bevorzugt größer als 3400 MPa.

Insbesondere die Kombination von Zugfestigkeit, Bruchdehnung und Biegefestigkeit ist bei den gehärteten Epoxidharzen aus den erfindungsgemäßen Blends vergleichsweise gut. Die erfindungsgemäßen Blends zeichnen sich insbesondere dadurch aus, dass die daraus erhältlichen gehärteten Epoxidharze bei guten Werten für die Zugfestigkeit von mindestens 70 MPa gleichzeitig vergleichsweise hohe Werte für die Bruchdehnung von beispielsweise mindestens 8,0% und/oder vergleichsweise hohe Werte für die Biegefestigkeit von beispielsweise mindestens 120 MPa aufweisen.

Ein weiterer Gegenstand der Erfindung ist ein Verfahren zur Herstellung des erfindungsgemäßen Blends, wobei die Epoxidharzkomponent a) mit dem Härter b) bei Temperaturen unterhalb der Anfangshärtungstemperatur vermischt werden.
Die Anfangshärtungstemperatur ist die Temperatur, bei der einer Mischung aus a) + b) reagiert. Diese Temperatur kann mit einer DSC nach DIN 53765 als T_{RO}^{E} ermittelt werden.

Bei Benutzung des erfindungsgemäßen Blends ist die Geschwindigkeit der Härtung vergleichbar gegenüber bekannten Blends aus dem Stand der Technik.

Ein weiterer Gegenstand der Erfindung ist die Verwendung des erfindungsgemäßen Blends zur Herstellung von gehärteten Epoxidharzen, vorzugsweise als Formkörper. Dabei können die gehärteten Epoxidharze Verstärkungsfasern beinhalten.

Ein weiterer Gegenstand der Erfindung das Verfahren zur Herstellung von gehärtetem Epoxidharz wobei der erfindungsgemäße Blend bei einer Temperatur größer oder gleich der Anfangshärtungstemperatur, bevorzugt größer oder gleich der Anfangshärtungstemperatur plus 20°C, gehärtet wird. Dabei können die gehärteten Epoxidharze Verstärkungsfasern beinhalten. Ein weiterer Gegenstand ist die Herstellung von Formkörpern aus dem erfindungsgemäßen gehärteten Epoxidharz. Dabei wird in einer bevorzugten Ausführungsform der erfindungsgemäße Blend mittels VARTM-Technologie in die Form für die Aushärtung zum Formkörper eingebracht.

Ein weiterer Gegenstand der vorliegenden Erfindung ist das gehärtete Epoxidharz, das erhältlich ist oder erhalten wird durch Aushärtung der erfindungsgemäßen Blends bei einer Temperatur größer oder gleich der Anfangshärtungstemperatur, bevorzugt größer oder gleich der Anfangshärtungstemperatur plus 20°C. Hierfür werden die erfindungsgemäßen Blends entweder in spezielle Formen eingefüllt oder auf Oberflächen aufgetragen und durch Temperaturerhöhung zur Aushärtung gebracht. In die Zusammensetzung der Blends für eine Auftragung auf Oberflächen können noch weitere Füllstoffe im Blend enthalten sein. Diese Füllstoffe sind ausgewählt aus der Gruppe der Thixotropiermittel (z.B. hydrophile und hydrophobe pyrogene Kieselsäuren), UV-Stabilisatoren (z.B. nanoskalige Oxide wie Titandioxid und Zinkoxid), Flammschutzmittel (z.B. Polyphosphate und Phosphor), Silicate und Carbonate zur Verbesserung der mechanischen Eigenschaften. Diese Füllstoffe können sowohl in der Epoxidharzkomponente a) als auch im Härter b) enthalten sein oder aber als Komponente c) dem erfindungsgemäßen Blend hinzugemischt werden. Die eingesetzten Formen, in die das erfindungsgemäße Blend eingeführt wird, können faserverstärkendes Material oder aber Elemente enthalten, die vor Umwelteinflüssen wie Nässe, Sauerstoff, Staubkörnern oder anderen aggressiven Materialien oder Einflüssen geschützt werden müssen.

Nach Härtung der erfindungsgemäßen Blends erhält man gehärtete Epoxidharze, die sowohl innerhalb einer Form als auch frei außerhalb jeglicher Formen hergestellt werden können. Bevorzugte gehärtete Epoxidharze sind solche, die in einem Formteil ausgehärtet sind. Diese Formteile sind ausgewählt aus der Gruppe von Formteilen für Kraftfahrzeuge, Flugzeuge, Schiffe, Boote, Sportartikel und Flügeln für Windkraftanlagen. Besonders bevorzugt sind Formteilen für Rotorblätter von Windkraftanlagen.

Diese Formteile können sowohl mit als auch ohne ein faserverstärkendes Material ausgelegt sein und/oder aber der erfindungsgemäße Blend kann noch faserverstärkendes Materialien enthalten. Die Faserverstärkenden Materialien können somit Gewebe, Uni- und Multiaxiale Gelege, Vliese und Kurzfasern aus folgenden Fasermaterialien sein: Glasfasern, Carbon oder Aramidfasern, PE-Fasern (Dyneema) und Basaltfasern. Bevorzugt sind Gewebe und Uni- und Multiaxialgelege aus Glasfasern und Kohlefasern. Bei großen Bauteilen, die faserverstärkt sind, sind die Bauteile bevorzugt mit dem faserverstärkendem Material ausgelegt. Besonders bevorzugt sind Uni- und Multiaxialgelege aus Glasfasern. Die Flügelschalen für Windkraftanlagen werden bevorzugt mit Glasfaser-Gelegen ausgelegt.

Die Herstellung der Formkörper erfolgt bevorzugt nach dem erfindungsgemäßen Verfahren, bei dem eine entsprechende Form bereitgestellt wird, in diese Form der erfindungsgemäße Blend eingebracht wird und erst nach vollständiger Ausfüllung der Form komplett gehärtet wird. Bei dem erfindungsgemäßen Verfahren wird der erfindungsgemäße Blend bevorzugt über die Infusionstechnologie in die entsprechende Form eingebracht. Hierbei wird an das Formteil Vakuum angelegt. Dieses Vakuum saugt der erfindungsgemäßen Blend bei Temperaturen unterhalb der Anfangshärtungstemperatur in die Form ein, so dass die Viskosität während des Füllvorgangs nahezu unverändert bleibt und alle Bereiche des Formteils von dem Blend ausgefüllt werden, bevor dieser vollständig ausgehärtet wird. Anschließend erfolgt die vollständige Aushärtung des Blends im Formkörper. Zum vollständigen Aushärten können von außen weitere Heizquellen angelegt werden.

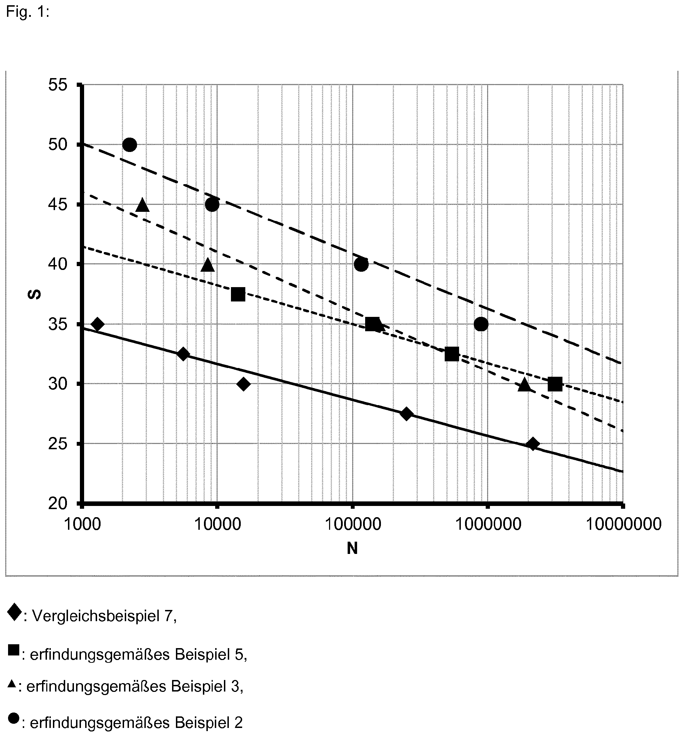

Fig. 1 zeigt die Wöhlerkurven (Spannungsamplitude S in MPa als y-Achse gegen die Lastwechselzahl N als x-Achse in logarithmischer Skalierung) für die gehärten Epoxidharze aus den Blends von Vergleichsbeispiel 7 (◆) und den erfindungsgemäßen Beispielen 2 (●), 3 (▲) und 5 (■).

### Beispiele:

Die vorliegende Erfindung soll durch nachfolgende Beispiele veranschaulicht werden, wobei die Beispiele nur der Veranschaulichung gewisser Aspekte der Erfindung dienen und keinesfalls einschränkend für den Umfang der Erfindung angesehen werden sollten.

Die Epoxidharzkomponenten a) und der Härterkomponenten b) für die erfindungsgemäßen Beispiele und die Vergleichsbeispiele wurden gemäß den Angaben der Tabellen 1 und 2 zusammengestellt. Dabei wurden die folgenden Substanzen eingesetzt:
Bisphenol-A-bisglycidylether (DGEBA, Epilox^{®} A18-00 der Fa. LEUNA-Harze GmbH, EEW =180), 1,4-Butandiolbisglycidylether (BDGE, Epilox^{®} P13-21 der Fa. LEUNA-Harze GmbH), 1,6-Hexandiolbisglycidylether (HDGE, Epilox^{®} P13-20 der Fa. LEUNA-Harze GmbH), C12-C14-Alkylglycidylether (C12-C14-AGE, Epilox^{®} P13-18 der Fa. LEUNA-Harze GmbH), Propylen Carbonat (PC, Fa. BASF SE), Polyetheramin D230 (D230, Baxxodur^{®} EC 301 der Fa. BASF SE), Polyetheramin XTJ 568 (XTJ568, Jeffamine^{®}XTJ 568 der Fa. Huntsman), Isophorondiamin (IPDA, Baxxodur^{®} EC 201 der Fa. BASF SE), Mischung aus 4-Methylcyclohexan-1,3-diamin und 2-Methylcyclohexan-1,3-diamin (MDACH, Baxxodur^{®} ECX 210 der Fa. BASF SE), Tetramethylguanidin (TMG, Fa. Lonza), 2,4,6-Tris-(dimethylaminomethyl)-phenol (DMP-30, Fa. Sigma-Aldrich), 1,4-Diazabicyclo[2,2,2]octan (DABCO, Fa. Sigma-Aldrich).

Die jeweiligen Epoxidharzkomponenten a) und Härterkomponenten b) wurden in dem Verhältnis vermischt, dass das in Tabelle 3 angegeben Verhältnis von Aminäquivalenten des Härters b) zu den Äquivalenten der Summe aus Epoxidharz, Reaktivverdünner und cyclischem Carbonat der Epoxidharzkomponent a) erzielt wurde.

Für die Blends dieser Beispiele wurde die Anfangsviskosität bei 25°C und die Zeit bis zum Erreichen einer Viskosität von 1000 mPa*s bei 40°C (nach DIN 16945) gemessen. Die Messergebnisse sind in Tabelle 3 zusammengestellt.

Für Vergleichsbeispiel 3 und die erfindungsgemäßen Beispiele 3, 5 und 8 wurden Composit-Werkstücke aus PVC-Schaum (Divinycell H60 der Fa. DIAB und dem entsprechenden Blend hergestellt und 15h bei 70°C gehärtet. Die Verfärbung des in Nachbarschaft zu dem Blend stehenden PVC-Schaums wurde visuell beurteilt und auf einer Skala von 1 (keine Verfärbung erkennbar) bis 5 (sehr dunkle Verfärbung)) bewertet. Die Ergebnisse sind ebenfalls in Tabelle 3 zusammengestellt.

Die Blends der Beispiele wurden 15h bei 70°C gehärtet. Die Formbeständigkeitstemperatur (HDT), die Zugfestigkeit, das Zugmodul, die Bruchdehnung, die Biegefestigkeit und das Biegemodul wurden für die gehärteten Epoxidharze aus den Blends gemäß der Normen ISO 75 A, ISO 527 und ISO 178 bestimmt. Die Messergebnisse sind in Tabelle 4 zusammengestellt.

Für Vergleichsbeispiel 7 und die erfindungsgemäßen Beispiele 2, 6 und 8 wurde die Wechselfestigkeit als Maß für die dynamische Stabilität bestimmt. Dazu wurden Versuchskörper mit der Abmessung 230 mm x 32 mm x 2,5 mm aus den jeweiligen Blends mit einem Biaxial-Gelege (aus Glasfaser) unter 15h Härtung bei 70°C hergestellt. Die Versuchskörper wurden in einem Zug-Druck-Schwellversuch eine Einstufen-Dauerschwingung (sinusförmige Belastung, R=-1, Prüffrequenz: 1,5-2 Hz, Prüfrichtung: +/- 45°, Prüftemperatur: 23°C, relative Feuchte: 50%) ausgesetzt. Gemessen wurde die Anzahl der Lastwechsel bis zum Bruch des Versuchskörpers für vorgegebene Spannungsamplituden. Die Messwerte und die sich daraus ergebenden Kennlinien (Wöhlerkurve; Spannungsamplitude S in MPa als y-Achse gegen die Lastwechselzahl N als x-Achse) sind in Fig. 1 dargestellt. Die erfindungsgemäßen Beispiele 2, 6 und 8 weisen eine deutlich erhöhte Wechselverstigkeit im Vergleich zu dem Vergleichsbeispiel 7 auf.

**Tabelle 1: Zusammensetzungen in Gewichtsteil der Epoxidharzkomponente a)**

| | **DGEBA** | **BDGE** | **HDGE** | **C12-C14-AGE** | **PC** |
|---|---|---|---|---|---|
| Vergleichsbeispiel 1 | 82 | 18 | | | |
| Vergleichsbeispiel 2 | 82 | 18 | | | |
| Vergleichsbeispiel 3 | 78 | 22 | | | |
| Vergleichsbeispiel 4 | 78 | 22 | | | |
| Vergleichsbeispiel 5 | 90 | | | | 10 |
| Vergleichsbeispiel 6 | 80 | | | | 20 |
| Vergleichsbeispiel 7 | 81 | | 19 | | |
| Erfindungsgemäßes Beispiel 1 | 90 | | | | 10 |
| Erfindungsgemäßes Beispiel 2 | 90 | | | | 10 |
| Erfindungsgemäßes Beispiel 3 | 88 | | | 4 | 8 |
| Erfindungsgemäßes Beispiel 4 | 89 | | | 4 | 7 |
| Erfindungsgemäßes Beispiel 5 | 89 | | | 4 | 7 |
| Erfindungsgemäßes Beispiel 6 | 89 | | | 3 | 8 |
| Erfindungsgemäßes Beispiel 7 | 87,5 | | | 5 | 7,5 |
| Erfindungsgemäßes Beispiel 8 | 90 | | | | 10 |
| Erfindungsgemäßes Beispiel 9 | 89 | | 2 | | 9 |
| Erfindungsgemäßes Beispiel 10 | 89 | | | 3 | 8 |

| | | | | | |
|---|---|---|---|---|---|
| BDGE: 1,4-Butandiolbisglycidylether; HDGE: 1,6-Hexandiolbisglycidylether, C12-C14-AGE: C12-C14-Alkylglycidylether | | | | | |

**Table 2: Zusammensetzungen in Gewichtsteil der Härterkomponente b)**

| | **D230** | **XTJ 568** | **IPDA** | **MDACH** | **TMG** | **DMP-30** | **DABCO** |
|---|---|---|---|---|---|---|---|
| Vergleichsbeispiel 1 | 60 | | 40 | | | | |
| Vergleichsbeispiel 2 | 70 | | | 30 | | | |
| Vergleichsbeispiel 3 | 60 | | 25 | | 15 | | |
| Vergleichsbeispiel 4 | 60 | | 25 | | 7,5 | 7,5 | |
| Vergleichsbeispiel 5 | 60 | | 40 | | | | |
| Vergleichsbeispiel 6 | 25 | | | 60 | 15 | | |
| Vergleichsbeispiel 7 | 60 | | 40 | | | | |
| Erfindungsgem. Beispiel 1 | 25 | | | 55 | 10 | 10 | |
| Erfindungsgem. Beispiel 2 | 55 | | | 35 | | 10 | |
| Erfindungsgem. Beispiel 3 | 58 | | | 38 | | 4 | |
| Erfindungsgem. Beispiel 4 | 49,75 | | | 49,75 | | | 0,5 |
| Erfindungsgem. Beispiel 5 | 60 | | | 39 | | | 1 |
| Erfindungsgem. Beispiel 6 | | 55 | 45 | | | | 2 |
| Erfindungsgem. Beispiel 7 | 47,5 | | | 47,5 | | | 5 |
| Erfindungsgem. Beispiel 8 | | 60 | 25 | | 15 | | |
| Erfindungsgem. Beispiel 9 | 59 | | 39 | | | 2 | |
| Erfindungsgem. Beispiel 10 | | 39 | | 59,5 | | | 0,5 |

**Tabelle 3: Blends und deren Eigenschaften**

| | **N-Äquiv.** | **Visk.** | **T(1000 mPa*s)** | **PVC-Verf.** |
|---|---|---|---|---|
| Vergleichsbeispiel 1 | 1 | 275 | 110 | - |
| Vergleichsbeispiel 2 | 1 | 250 | 140 | - |
| Vergleichsbeispiel 3 | 0,6 | 275 | 160 | 5 |
| Vergleichsbeispiel 4 | 0,6 | 320 | 130 | - |
| Vergleichsbeispiel 5 | 1 | 200 | 80 | - |
| Vergleichsbeispiel 6 | 0,6 | 100 | 100 | - |
| Vergleichsbeispiel 7 | 1 | 250 | 120 | - |
| Erfindungsgem. Beispiel 1 | 0,4 | 350 | 90 | - |
| Erfindungsgem. Beispiel 2 | 0,6 | 325 | 100 | - |
| Erfindungsgem. Beispiel 3 | 0,7 | 250 | 130 | 3 |
| Erfindungsgem. Beispiel 4 | 0,9 | 250 | 120 | - |
| Erfindungsgem. Beispiel 5 | 0,9 | 250 | 120 | 1 |
| Erfindungsgem. Beispiel 6 | 0,8 | 300 | 100 | - |
| Erfindungsgem. Beispiel 7 | 0,8 | 300 | 90 | - |
| Erfindungsgem. Beispiel 8 | 0,6 | 325 | 140 | 5 |
| Erfindungsgem. Beispiel 9 | 0,8 | 275 | 100 | - |
| Erfindungsgem. Beispiel 10 | 0,9 | 225 | 120 | - |

| | | | | |
|---|---|---|---|---|
| N-Äquiv.: Aminäquivalente, pro Äquivalent Epoxid/Carbonat Visk.: Viskosität bei 25°C in mPa*s T(1000mPa*s): Zeit bis zur Erreichung von 1000mPa*s bei 40°C in min PVC-Verf.: Verfärbung von in Kontakt zu Blend stehendem PVC-Schaum während Härtung: 1: keine; 2: sehr leicht, 3: leicht; 4: dunkel; 5: sehr dunkel | | | | |

Die Tabelle 3 zeigt dass die erfindungsgemäßen Blends vergleichbar viskos und reaktiv sind wie Standardblends, die in der Herstellung von Formkörper für Rotorblatter von Windkraftanlage eingesetzt werden.

**Tabelle 4: Gehärteten Epoxidharze (15h, 70°C) und deren Eigenschaften**

| | **Zugf.** | **Zugm.** | **Bruchd.** | **Biegef.** | **Biegem.** | **HDT** |
|---|---|---|---|---|---|---|
| Vergleichsbeispiel 1 | 68 | 3100 | 6,5 | 115 | 3200 | 73 |
| Vergleichsbeispiel 2 | 68 | 3100 | 7,5 | 110 | 3100 | 72 |
| Vergleichsbeispiel 3 | 71 | 3100 | 7,5 | 115 | 3100 | 87 |
| Vergleichsbeispiel 4 | 71 | 3000 | 7,5 | 115 | 3100 | 85 |
| Vergleichsbeispiel 5 | 65 | 3200 | 9 | 110 | 3400 | 64 |
| Vergleichsbeispiel 6 | 62 | 3100 | 5,5 | 95 | 3200 | 55 |
| Vergleichsbeispiel 7 | 69 | 3000 | 9,5 | 112 | 3000 | 82 |
| Erfindungsgem. Beispiel 1 | 85 | 3600 | 8,5 | 145 | 3900 | 82 |
| Erfindungsgem. Beispiel 2 | 79 | 3350 | 10 | 125 | 3500 | 84 |
| Erfindungsgem. Beispiel 3 | 72 | 3200 | 12 | 120 | 3300 | 76 |
| Erfindungsgem. Beispiel 4 | 70 | 3200 | 11 | 120 | 3300 | 73 |
| Erfindungsgem. Beispiel 5 | 71 | 3200 | 10 | 120 | 3300 | 71 |
| Erfindungsgem. Beispiel 6 | 72 | 3100 | 9 | 120 | 3200 | 75 |
| Erfindungsgem. Beispiel 7 | 77 | 3200 | 8,5 | 127 | 3300 | 78 |
| Erfindungsgem. Beispiel 8 | 74 | 3300 | 9 | 126 | 3400 | 75 |
| Erfindungsgem. Beispiel 9 | 70 | 3100 | 12 | 113 | 3200 | 71 |
| Erfindungsgem. Beispiel 10 | 72 | 3100 | 11 | 117 | 3300 | 76 |

| | | | | | | |
|---|---|---|---|---|---|---|
| Zugf.: Zugfestigkeit in MPa; Zugm.: Zugmodul in Mpa; Bruchd.: Bruchdehnung in %; Biegef.: Biegefestigkeit in MPa; Biegem.: Biegemodul in MPa; HDT: Formbeständigkeitstemperatur in °C | | | | | | |

Die Tabelle 4 zeigt dass die nach dem erfindungsgemäßen gehärteten Epoxidharze höhere mechanische Eigenschaften zeigen und gleichzeitig einer HDT größer als 70°C aufweisen.

## Patentansprüche

1. Blend enthaltend
a. eine Epoxidharzkomponente, enthaltend
a1) 75 bis 97 Gewichtsteile, bezogen auf die Epoxidharzkomponente a), an einem oder mehreren Epoxidharzen ausgewählt aus der Gruppe von aromatischen Epoxidharzen und/oder cycloaliphatischen Epoxidharzen und,
a2) 3 bis 18 Gewichtsteile, bezogen auf die Epoxidharzkomponente a), an einem oder mehreren cyclischen Carbonaten ausgewählt aus der Gruppe von cyciischen Carbonaten mit 1 bis 10 C-Atomen und,
a3) 0 bis 15 Gewichtsteile, bezogen auf die Epoxidharzkomponente a), an einem oder mehreren Reaktivverdünnern,
wobei die Gewichtsteile der Komponenten a1 bis a3) sich jeweils zu 100 addieren,
und
b. einem Härter, enthaltend
b1) 10 bis 79 Gewichtsteile, bezogen auf den Härter b), an einem oder mehreren Polyalkoxypolyaminen und,
b2) 20 bis 89 Gewichtsteile, bezogen auf den Härter b), aus einem oder mehreren weiteren Aminen ausgewählt aus der Gruppe von aromatischen, arylaliphatischen, cycloaliphatischen, heterocyclischen und aliphatischen Polyaminen mit mindestens 3 C-Atomen und mindesten 4 reaktiven NH-Funktionen in primären und/oder sekundären Aminogruppen und
b3) 0,5 bis 30 Gewichtsteile, bezogen auf die Härter b), an einem oder mehreren Katalysatoren ausgewählt aus der Gruppe von tertiären Aminen, Imidazolen, Imidazolinen, Guanidinen mit weniger als 3 C-Atomen und/oder weniger als 4 reaktiven NH-Funktionen in Aminogruppen, sekundären Aminen mit weniger als 4 reaktiven NH-Funktionen, substituierte Harnstoffen, Guanamine und Ketiminen,
wobei die Gewichtsteile der Komponenten b1) bis b3) sich jeweils zu 100 addieren, wobei das Verhältnis von Aminäquivalenten des Härters b) zum Äquivalent der Summe aus Epoxidharz und cyclische Carbonat der eingesetzten Epoxidharzkomponente a) im Bereich von 0,3 bis 0,9 liegt,
wobei die Reaktivverdünner a3) ausgewählt sind aus der Gruppe von 1,4-Butandiolbisglycidylether, 1,6-Hexandiolbisglycidylether, Glycidylneodecanoat, Glycidylversatat, 2-Ethylhexylglycidylether, C₈-C₁₀-Alkylglycidylether, C₁₂-C₁₄-Alkylglycidylether, C₁₃-C₁₅-Alkylglycidylether, p-tert-Butylglycidether, Butylglycidether, Nonylphenylglycidether, p-tert-Butylphenylglycid-ether, Phenylglycidether, o-Cresylglycidether, Polyoxypropylenglycoldiglycidether,Trimethylolpropantriglycidether (TMP), Glycerintriglycidether, Triglycidylparaaminophenol (TGPAP), Divinylbenzyldioxid und Dicyclopentadiendiepoxid,.

2. Der Blend nach Anspruch 1, wobei die Epoxidharze a1) ausgewählt sind aus der Gruppe von Bisphenol-A-bisglycidylether und Bisphenol-F-bisglycidylether.

3. Der Blend nach einem der Ansprüche 1 bis 2, wobei die ein oder mehreren cyclischen Carbonate a2) Propylencarbonat und/oder Ethylencarbonat sind.

4. Der Blend nach einem der Ansprüche 1 bis 3, wobei die ein oder mehreren Reaktivverdünner a3) ausgewählt sind aus der Gruppe von 1,4-Butandiolbisglycidylether, 1,6-Hexandiolbisglycidylether, C₁₂-C₁₄-Alkylglycidylether, C₁₃-C₁₅-Alkylglycidylether und Trimethylolpropantriglycidether.

5. Der Blend nach einem der Ansprüche 1 bis 4, wobei die ein oder mehreren Reaktivverdünner a3) ausgewählt sind aus der Gruppe von 1,4-Butandiolbisglycidylether, 1,6-Hexandiolbisglycidylether, C₁₂-C₁₄- Alkylglycidylether und C₁₃-C₁₅-Alkylglycidylether.

6. Der Blend nach einem der Ansprüche 1 bis 5, wobei die ein oder mehreren Polyalkoxypolyamine b1) ausgewählt ist aus der Gruppe von difunktionellem, primären Polyetheramin auf der Basis von Polypropylenglykol mit einer mittleren Molmasse von 230, difunktionellem, primären Polyetheramin auf der Basis von Polypropylenglykol mit einer mittleren Molmasse von 400, trifunktionellem, primären Polyetheramin hergestellt durch Reaktion von Propylenoxid mit Trimethylolpropan gefolgt durch eine Aminierung der endständigen OH-Gruppen mit einer mittleren Molmasse von 403, trifunktionellem, primären Polyetheramin hergestellt durch Reaktion von Propylenoxid mit Glycerin gefolgt durch eine Aminierung der endständigen OH-Gruppen mit einer mittleren Molmasse von 5000 und aliphatischem Polyetheramin hergestellt durch Aminierung von mit Butylenoxid aufgepfropften Alkoholen mit einer mittleren Molmasse von 219.

7. Der Blend nach einem der Ansprüche 1 bis 6, wobei ein oder mehreren weiteren Amine b2) Isophorondiamin (IPDA) und /oder eine Mischung von 4-Methylcyclohexan-1,3-diamin und 2-Methylcyclohexan-1,3-diamin (MDACH) ist.

8. Der Blend nach einem der Ansprüche 1 bis 7, wobei der Blend noch Verstärkungsfasern enthält.

9. Der Blend nach einem der Ansprüche 1 bis 8, wobei die ein oder mehreren cyclischen Carbonate a2) 6 bis 18 Gewichtsteile bezogen auf die Epoxidharzkomponente a) ausmachen.

10. Der Blend nach einem der Ansprüche 1 bis 9, wobei die ein oder mehreren Katalysatoren b3) ausgewählt ist aus der Gruppe von tertiären Aminen und Guanidinen mit weniger als 3 C-Atomen und/oder weniger als 4 reaktiven NH-Funktionen in Aminogruppen.

11. Der Blend nach einem der Ansprüche 1 bis 9, wobei die ein oder mehreren Katalysatoren b3) ausgewählt ist aus der Gruppe der tertiären Amine.

12. Der Blend nach einem der Ansprüche 1 bis 9, wobei die ein oder mehreren Katalysatoren b3) ausgewählt ist aus der Gruppe der Guanidine mit weniger als 3 C-Atomen und/oder weniger als 4 reaktiven NH-Funktionen in Aminogruppen.

13. Der Blend nach einem der Ansprüche 1 bis 9, wobei die ein oder mehreren Katalysatoren b3) ausgewählt ist aus der Gruppe von Tetramethylguanidin (TMG), 2,4,6-Tris-(dimethylaminomethyl)-phenol (DMP 30) und 1,4-Diazabicyclo[2,2,2]octan (DABCO).

14. Der Blend nach einem der Ansprüche 1 bis 9, wobei die ein oder mehreren Katalysatoren b3) ausgewählt ist aus der Gruppe von 2,4,6-Tris-(dimethylaminomethyl)-phenol (DMP 30) und 1,4-Diazabicyclo[2,2,2]octan (DABCO).

15. Der Blend nach einem der Ansprüche 1 bis 9, wobei der Katalysator b3) Tetramethylguanidin (TMG) ist.

16. Der Blend nach einem der Ansprüche 1 bis 13, wobei die ein oder mehreren Katalysatoren b3) 0,5 bis 7 Gewichtsteile, bezogen auf den Härter b) ausmachen.

17. Der Blend nach einem der Ansprüche 1 bis 9, wobei die ein oder mehreren Katalysatoren b3) 0,5 bis 7 Gewichtsteile, bezogen auf den Härter b) ausmachen und ausgewählt sind aus der Gruppe von 2,4,6-Tris-(dimethylaminomethyl)-phenol (DMP 30) und 1,4-Diazabicyclo[2,2,2)octan (DABCO).

18. Der Blend nach einem der Ansprüche 1 bis 9, wobei der Katalysator b3) 0,5 bis 7 Gewichtsteile bezogen auf den Härter b) ausmacht und 1,4-Diazabicyclo[2,2,2]octan (DABCO) ist.

19. Verfahren zur Herstellung des Blends nach einem der Ansprüche 1 bis 18, wobei die Epoxidharzkomponente a) und der Härter b) bei Temperaturen unterhalb der Anfangshärtungstemperatur vermischt werden.

20. Verfahren zur Herstellung eines gehärteten Epoxidharzes, wobei der Blend nach einem der Ansprüche 1 bis 18 bei einer Temperatur größer oder gleich der Anfangshärtungstemperatur gehärtet wird.

21. Gehärtetes Epoxidharz erhältlich durch Härtung des Blends nach einem der Ansprüche 1 bis 18 bei einer Temperatur größer oder gleich der Anfangshärtungstemperatur.

## Claims

1. A blend comprising
a. an epoxy resin component comprising
a1) from 75 to 97 parts by weight, based on epoxy resin component a), of one or more epoxy resins selected from the group of aromatic epoxy resins and/or cycloaliphatic epoxy resins, and
a2) from 3 to 18 parts by weight, based on epoxy resin component a), of one or more cyclic carbonates selected from the group of cyclic carbonates having from 1 to 10 carbon atoms, and
a3) from 0 to 15 parts by weight, based on epoxy resin component a), of one or more reactive diluents,
where the parts by weight of components a1) to a3) always give a total of 100,
and
b. a hardener comprising
b1) from 10 to 79 parts by weight, based on the hardener b), of one or more polyalkoxypolyamines, and
b2) from 20 to 89 parts by weight, based on the hardener b), of one or more other amines selected from the group of aromatic, arylaliphatic, cycloaliphatic, heterocyclic and aliphatic polyamines having at least 3 carbon atoms and at least 4 reactive NH functions in primary and/or secondary amino groups, and
b3) from 0.5 to 30 parts by weight, based on the hardener b), of one or more catalysts selected from the group of tertiary amines, imidazoles, imidazolines, guanidines having less than 3 carbon atoms and/or less than 4 reactive NH functions in amino groups, secondary amines having less than 4 reactive NH functions, substituted ureas, guanamines and ketimines,
where the parts by weight of components b1) to b3) always give a total of 100,
where the ratio of amino equivalents of the hardener b) to the equivalent of the entirety of epoxy resin and cyclic carbonate in epoxy resin component a) used is in the range from 0.3 to 0.9, where the reactive diluents a3) are selected from the group of 1,4-butanediol bisglycidyl ether, 1,6-hexanediol bisglycidyl ether, glycidyl neodecanoate, glycidyl versatate, 2-ethylhexyl glycidyl ether, C₈-C₁₀-alkyl glycidyl ether, C₁₂-C₁₄-alkyl glycidyl ether, C₁₃-C₁₅-alkyl glycidyl ether, p-tert-butyl glycidic ether, butyl glycidic ether, nonylphenyl glycidic ether, p-tert-butylphenyl glycidic ether, phenyl glycidic ether, o-cresyl glycidic ether, polyoxypropylene glycol diglycidic ether, trimethylolpropane triglycidic ether (TMP), glycerol triglycidic ether, triglycidylpara-aminophenol (TGPAP), divinylbenzyl dioxide and dicyclopentadiene diepoxide.

2. The blend according to claim 1, where the epoxy resins a1) are those selected from the group of bisphenol A bisglycidyl ether and bisphenol F bisglycidyl ether.

3. The blend according to claim 1 or 2, where the one or more cyclic carbonates a2) are propylene carbonate and/or ethylene carbonate.

4. The blend according to any of claims 1 to 3, where the one or more reactive diluents a3) are those selected from the group of 1,4-butanediol bisglycidyl ether, 1,6-hexanediol bisglycidyl ether, C₁₂-C₁₄-alkyl glycidyl ether, C₁₃-C₁₅-alkyl glycidyl ether and trimethylolpropane triglycidic ether.

5. The blend according to any of claims 1 to 4, where the one or more reactive diluents a3) are selected from the group of 1,4-butanediol bisglycidyl ether, 1,6-hexanediol bisglycidyl ether, C₁₂-C₁₄-alkyl glycidyl ether and C₁₃-C₁₅-alkyl glycidyl ether.

6. The blend according to any of claims 1 to 5, where the one or more polyalkoxypolyamines b1) are selected from the group of difunctional, primary polyetheramine based on polypropylene glycol with average molecular weight 230, difunctional, primary polyetheramine based on polypropylene glycol with average molecular weight 400, trifunctional, primary polyetheramine produced via reaction of propylene oxide with trimethylolpropane followed by amination of the terminal OH groups with average molecular weight 403, trifunctional, primary polyetheramine produced via reaction of propylene oxide with glycerol followed by amination of the terminal OH groups with average molecular weight 5000 and aliphatic polyetheramine produced via amination of butyleneoxide-grafted alcohols with average molecular weight 219.

7. The blend according to any of claims 1 to 6, where one or more other amines b2) is isophoronediamine (IPDA) and/or a mixture of 4-methylcyclohexane-1,3-diamine and 2-methylcyclohexane-1,3-diamine (MDACH).

8. The blend according to any of claims 1 to 7, where the blend also comprises reinforcing fibers.

9. The blend according to any of claims 1 to 8, where the one or more cyclic carbonates a2) make up from 6 to 18 parts by weight, based on the epoxy resin component a).

10. The blend according to any of claims 1 to 9, where the one or more catalysts b3) are selected from the group of tertiary amines and guanidines with less than 3 carbon atoms and/or less than 4 reactive NH functions in amino groups.

11. The blend according to any of claims 1 to 9, where the one or more catalysts b3) are selected from the group of the tertiary amines.

12. The blend according to any of claims 1 to 9, where the one or more catalysts b3) are selected from the group of the guanidines having less than 3 carbon atoms and/or less than 4 reactive NH functions in amino groups.

13. The blend according to any of claims 1 to 9, where the one or more catalysts b3) are selected from the group of tetramethylguanidine (TMG), 2,4,6-tris(dimethylaminomethyl)phenol (DMP 30) and 1,4-diazabicyclo[2.2.2]octane (DABCO).

14. The blend according to any of claims 1 to 9, where the one or more catalysts b3) are selected from the group of 2,4,6-tris(dimethylaminomethyl)phenol (DMP 30) and 1,4-diazabicyclo[2.2.2]octane (DABCO).

15. The blend according to any of claims 1 to 9, where the catalyst b3) is tetramethylguanidine (TMG).

16. The blend according to any of claims 1 to 13, where the one or more catalysts b3) make up from 0.5 to 7 parts by weight, based on the hardener b).

17. The blend according to any of claims 1 to 9, where the one or more catalysts b3) make up from 0.5 to 7 parts by weight, based on the hardener b), and are selected from the group of 2,4,6-tris(dimethylaminomethyl)phenol (DMP 30) and 1,4-diazabicyclo[2.2.2]octane (DABCO).

18. The blend according to any of claims 1 to 9, where the catalyst b3) makes up from 0.5 to 7 parts by weight, based on the hardener b), and is 1,4-diazabicyclo[2.2.2]octane (DABCO).

19. A process for producing the blend according to any of claims 1 to 18, where epoxy resin component a) and the hardener b) are mixed at temperatures below the curing-onset temperature.

20. A process for producing a cured epoxy resin, where the blend according to any of claims 1 to 18 is cured at a temperature which is above or the same as the curing-onset temperature.

21. A cured epoxy resin obtainable via curing of the blend according to any of claims 1 to 18 at a temperature which is above or the same as the curing-onset temperature.

## Revendications

1. Mélange contenant :
a. un composant résine époxyde, contenant :
a1) 75 à 97 parties en poids, par rapport au composant résine époxyde a), d'une ou de plusieurs résines époxydes choisies dans le groupe constitué par les résines époxydes aromatiques et/ou les résines époxydes cycloaliphatiques, et
a2) 3 à 18 parties en poids, par rapport au composant résine époxyde a), d'un ou de plusieurs carbonates cycliques choisis dans le groupe constitué par les carbonates cycliques de 1 à 10 atomes C, et
a3) 0 à 15 parties en poids, par rapport au composant résine époxyde a), d'un ou de plusieurs diluants réactifs,
la somme des parties en poids des composants a1) à a3) étant à chaque fois de 100,
et
b. un durcisseur, contenant :
b1) 10 à 79 parties en poids, par rapport au durcisseur b), d'une ou de plusieurs polyalcoxypolyamines et
b2) 20 à 89 parties en poids, par rapport au durcisseur b), d'une ou de plusieurs amines supplémentaires choisies dans le groupe constitué par les polyamines aromatiques, arylaliphatiques, cycloaliphatiques, hétérocycliques et aliphatiques contenant au moins 3 atomes C et au moins 4 fonctions NH réactives dans des groupes amino primaires et/ou secondaires, et
b3) 0,5 à 30 parties en poids, par rapport au durcisseur b), d'un ou de plusieurs catalyseurs choisis dans le groupe constitué par les amines tertiaires, les imidazoles, les imidazolines, les guanidines contenant moins de 3 atomes C et/ou moins de 4 fonctions NH réactives dans des groupes amino, les amines secondaires contenant moins de 4 fonctions NH réactives, les urées substituées, les guanamines et les cétimines,
la somme des parties en poids des composants b1) à b3) étant à chaque fois de 100,
le rapport entre les équivalents d'amine du durcisseur b) et l'équivalent de la somme de la résine époxyde et du carbonate cyclique du composant résine époxyde a) utilisé se situant dans la plage allant de 0,3 à 0,9, le diluant réactif a3) étant choisi dans le groupe constitué par l'éther bisglycidylique de 1,4-butanediol, l'éther bisglycidylique de 1,6-hexanediol, le néodécanoate de glycidyle, le versatate de glycidyle, l'éther glycidylique de 2-éthylhexyle, l'éther glycidylique d'alkyle en C₈-C₁₀, l'éther glycidylique d'alkyle en C₁₂-C₁₄, l'éther glycidylique d'alkyle en C₁₃-C₁₅, l'éther glycidylique de p-tert-butyle, l'éther glycidylique de butyle, l'éther glycidylique de nonylphényle, l'éther glycidylique de p-tert-butylphényle, l'éther glycidylique de phényle, l'éther glycidylique d'o-crésyle, l'éther diglycidylique de polyoxypropylène, l'éther triglycidylique de triméthylolpropane (TMP), l'éther triglycidylique de glycérine, le triglycidylparaaminophénol (TGPAP), le dioxyde de divinylbenzyle et le diépoxyde de dicyclopentadiène.

2. Mélange selon la revendication 1, dans lequel les résines époxyde a1) sont choisies dans le groupe constitué par l'éther bisglycidylique de bisphénol A et l'éther bisglycidylique de bisphénol F.

3. Mélange selon l'une quelconque des revendications 1 à 2, dans lequel le ou les carbonates cycliques a2) sont le carbonate de propylène et/ou le carbonate d'éthylène.

4. Mélange selon l'une quelconque des revendications 1 à 3, dans lequel le ou les diluants réactifs sont choisis dans le groupe constitué par l'éther bisglycidylique de 1,4-butanediol, l'éther bisglycidylique de 1,6-hexanediol, l'éther glycidylique d'alkyle en C₁₂-C₁₄, l'éther glycidylique d'alkyle en C₁₃-C₁₅ et l'éther triglycidylique de triméthylolpropane.

5. Mélange selon l'une quelconque des revendications 1 à 4, dans lequel le ou les diluants réactifs a3) sont choisis dans le groupe constitué par l'éther bisglycidylique de 1,4-butanediol, l'éther bisglycidylique de 1,6-hexanediol, l'éther glycidylique d'alkyle en C₁₂-C₁₄ et l'éther glycidylique d'alkyle en C₁₃-C₁₅.

6. Mélange selon l'une quelconque des revendications 1 à 5, dans lequel la ou les polyalcoxypolyamines b1) sont choisies dans le groupe constitué par une polyétheramine primaire difonctionnelle à base de polypropylène glycol ayant une masse molaire moyenne de 230, une polyétheramine primaire difonctionnelle à base de polypropylène glycol ayant une masse molaire moyenne de 400, une polyétheramine primaire trifonctionnelle fabriquée par réaction d'oxyde de propylène avec du triméthylolpropane suivie par une amination des groupes OH terminaux ayant une masse molaire moyenne de 403, une polyétheramine primaire trifonctionnelle fabriquée par réaction d'oxyde de propylène avec de la glycérine suivie par une amination des groupes OH terminaux ayant une masse molaire moyenne de 5 000, et une polyétheramine aliphatique fabriquée par amination d'alcools greffés avec de l'oxyde de butylène ayant une masse molaire moyenne de 219.

7. Mélange selon l'une quelconque des revendications 1 à 6, dans lequel une ou plusieurs amines b2) supplémentaires sont l'isophorone-diamine (IPDA) et/ou un mélange de 4-méthylcyclohexane-1,3-diamine et de 2-méthylcyclohexane-1,3-diamine (MDACH).

8. Mélange selon l'une quelconque des revendications 1 à 7, dans lequel le mélange contient encore des fibres de renforcement.

9. Mélange selon l'une quelconque des revendications 1 à 8, dans lequel le ou les carbonates cycliques a2) représentent 6 à 18 parties en poids par rapport au composant résine époxyde a).

10. Mélange selon l'une quelconque des revendications 1 à 9, dans lequel le ou les catalyseurs b3) sont choisis dans le groupe constitué par les amines tertiaires et les guanidines contenant moins de 3 atomes C et/ou moins de 4 fonctions NH réactives dans des groupes amino.

11. Mélange selon l'une quelconque des revendications 1 à 9, dans lequel le ou les catalyseurs b3) sont choisis dans le groupe des amines tertiaires.

12. Mélange selon l'une quelconque des revendications 1 à 9, dans lequel le ou les catalyseurs b3) sont choisis dans le groupe des guanidines contenant moins de 3 atomes C et/ou moins de 4 fonctions NH réactives dans des groupes amino.

13. Mélange selon l'une quelconque des revendications 1 à 9, dans lequel le ou les catalyseurs b3) sont choisis dans le groupe constitué par la tétraméthylguanidine (TMG), le 2,4,6-tris-(diméthylaminométhyl)-phénol (DMP 30) et le 1,4-diazabicyclo[2,2,2]octane (DABCO).

14. Mélange selon l'une quelconque des revendications 1 à 9, dans lequel le ou les catalyseurs b3) sont choisis dans le groupe constitué par le 2,4,6-tris-(diméthylaminométhyl)-phénol (DMP 30) et le 1,4-diazabicyclo[2,2,2]octane (DABCO).

15. Mélange selon l'une quelconque des revendications 1 à 9, dans lequel le catalyseur b3) est la tétraméthylguanidine (TMG).

16. Mélange selon l'une quelconque des revendications 1 à 13, dans lequel le ou les catalyseurs b3) représentent 0,5 à 7 parties en poids, par rapport au durcisseur b).

17. Mélange selon l'une quelconque des revendications 1 à 9, dans lequel le ou les catalyseurs b3) représentent 0,5 à 7 parties en poids par rapport au durcisseur b) et sont choisis dans le groupe constitué par le 2,4,6-tris-(diméthylaminométhyl)-phénol (DMP 30) et le 1,4-diazabicyclo[2,2,2]octane (DABCO).

18. Mélange selon l'une quelconque des revendications 1 à 9, dans lequel le catalyseur b3) représente 0,5 à 7 parties en poids par rapport au durcisseur b) et est le 1,4-diazabicyclo[2,2,2]octane (DABCO).

19. Procédé de fabrication du mélange selon l'une quelconque des revendications 1 à 18, dans lequel le composant résine époxyde a) et le durcisseur b) sont mélangés à des températures inférieures à la température de début de durcissement.

20. Procédé de fabrication d'une résine époxyde durcie, selon lequel le mélange selon l'une quelconque des revendications 1 à 18 est durci à une température supérieure ou égale à la température de début de durcissement.

21. Résine époxyde durcie pouvant être obtenue par durcissement du mélange selon l'une quelconque des revendications 1 à 18 à une température supérieure ou égale à la température de début de durcissement.
